# EUROPEAN PATENT SPECIFICATION

(11) **EP 2 201 847 B1**
(45) Date of publication and mention of the grant of the patent: **19.06.2013**
(21) Application number: 08842550.9
(22) Date of filing: 08.10.2008
(51) Int. Cl.: A23L 1/00, A23L 1/16

(54) **FROZEN NOODLES, METHOD OF PRODUCING THE FROZEN NOODLES AND COATING SOLUTION FOR PREVENTING FREEZER BURN**
GEFRORENE NUDELN, VERFAHREN ZUR HERSTELLUNG DER GEFRORENEN NUDELN UND BESCHICHTUNGSLÖSUNG ZUR VERHINDERUNG VON GEFRIERBRÄNDEN
NOUILLES CONGELEES, PROCEDE DE PRODUCTION DES NOUILLES CONGELEES ET SOLUTION DE REVETEMENT POUR EMPECHER UNE BRULURE DE CONGELATION

(30) Priority: 26.10.2007 JP 2007278273
(43) Date of publication of application: 30.06.2010
(73) Proprietor: Nisshin Foods Inc., Tokyo 101-8441 (JP)
(72) Inventor: IRIE, Kentaro, Tokyo 103-0016 (JP)
(74) Representative: Blodig, Wolfgang
(86) International application number: PCT/JP2008/002839
(87) International publication number: WO 2009/054100

(56) References cited:
- EP-A1- 0 882 407
- EP-A1- 1 344 461
- WO-A1-01/08508
- WO-A1-03/022079
- DE-A1- 19 937 973
- FR-A1- 2 846 196
- JP-A- 3 080 068
- JP-A- 7 099 907
- JP-A- 10 146 162
- JP-A- 62 019 059
- JP-A- 2000 032 938
- JP-A- 2002 345 424
- JP-A- 2003 009 793
- JP-A- 2003 135 013
- JP-A- 2005 000 171
- JP-A- 2005 110 617
- JP-A- 2007 174 920
- JP-B- 47 014 898
- US-A- 5 139 808
- US-A1- 2004 253 349

## Description

### Field of the Invention

The present invention relates to a method of producing freezer burn resistant frozen noodles and use of a coating liquid for the prevention of freezer burn of frozen noodles.

### Background of the invention

Generally, when frozen foods are stored in a frozen state for a long period of time, a discoloring phenomenon exhibiting that original food color is partially or entirely disappears, and the like, i.e., so called freezer burn, is sometimes observed. Such deterioration is damage to a commercial value of a food product both in the appearance and the texture.

In this connection, as a conventional method for preventing the freezer burn of frozen noodles, for instances, a method for manufacturing strands forming granular contact-type water quality-improving agent which has a vitreous coating layer containing each crystal body of ferrosoferric oxide and an anatase-type titanium oxide and adding the water which has been treated with the contact-type water quality-improving agent to wheat flour is approached (see, Patent Document 1).
However, since this method involves with preparing a contact-type water quality-improving agent with specific composition, applying the water quality-improving agent in a water permeating apparatus and bringing the apparatus in contact with water to provide specific water, there were problems that not only the excessive facilities are required but also a long period of time is required for a pre-treatment which is necessary before starting real processes to produce any noodles.

In addition, although a technology is not related to frozen. noodles, a method for preventing freezer burn of fried coating of frozen food products has been reported in which a thickening agent, which is sparingly soluble in cold water but soluble in hot water, is blended in a coating mixture for fried food products (see, Patent document 2).
However, even when such method is applied to frozen noodles, a fully satisfying effect of preventing freezer burn could not be obtained.
[Patent Document 1] Japanese Patent Application Laid-Open (JP-A) No. 2003-009793
[Patent Document 2] JP-A No. 2003-135013

US 2004/0253349 discloses a method for making a frozen food product comprising the steps of: adding at least one of rice and noodles to a heat resistant container; adding at least one of a meat and vegetable to the at least one of rice and noodles; preparing a sauce and at least partially covering the at least one of meat and vegetables with the sauce.

### Disclosure of the Invention

### Problem to be solved by the Invention

The present invention, which was devised in view of the conventional problems and situations of, is to provide frozen noodles more easily and more efficiently that are substantially resistant to freezer burn.
As used herein, the freezer burn means phenomenon in which the surface of noodles stored in a frozen state becomes dried, specifically, the thickness of noodles becomes thinner and/or the surface of noodles becomes discolored due to the surface dehydration.

### Means for solving problem

In order to solve the problems, inventors of the present invention conducted extensive studies. As a result, it was found that by attaching at least water, common salt, fats and oils and a thickening agent to cooked noodles before freezing, an excellent result can be obtained, and therefore the present invention was completed.

The problems are solved by the present invention which provides frozen noodles **characterized in that** they are a frozen object of cooked noodles that are attached at least with water, common salt, fats and oils and a thickening agent.

The problems are further solved by the present invention which provides a method of producing frozen noodles characterized **in that** at least water, common salt, fats and oils and a thickening agent are simultaneouslyor separatelyattached to cookednoodles and the resulting noodles are frozen.

The problems are still further solved by the present invention which provides a coating liquid for the prevention of freezer burn of frozen noodles characterized in that it includeswater, commonsalt, fats and oils and a thickening agent.

### Effect of the Invention

The present invention provides frozen noodles that are substantially resistant to freezer burn more easily and more efficiently.

### [Detailed Description of the Invention]

According to the present invention, water, common salt, fats and oils and a thickening agent are attached simultaneously or separately attached to cooked noodles.

The attachment amount of water to cooked noodles is preferably 2.0 to 15.0 parts by weight, or more preferably 5.0 to 10.0 parts by weight compared to 100 parts by weight of cooked noodles, in terms of improving dispersibility.

Common salt that is used in the present invention can be any common salt that is generally used for a food product.
The attachment amount of common salt to cooked noodles is preferably 0.1 to 2.0 parts by weight, more preferably 0.2 to 1.5 parts by weight compared to 100 parts by weight of cooked noodles in terms of improving taste and flavor of the noodles, or still more preferably 0.2 to 1.0 parts by weight compared to 100 parts by weight of cooked noodles in terms of favorable salty taste of the noodles.

Fats and oils that are used in the present invention can be any edible vegetable and animal fats and oils that are commonly used for a food product. The example includes soybean oil, margarine, shortening, butter, olive oil, cacao oil, palm oil, palm seed oil, coconut oil, corn oil, cotton seed oil, canola oil, sunflower oil, cow fat, pig fat, milk fat, and fish oil. In particular, in terms of improving taste and flavor, soybean oil and margarine are preferred. In addition, these fats and oils can be used singly or in combination of two or more.
The attachment amount of fats and oils to cooked noodles is preferably 0.5 to 5.0 parts by weight, more preferably 1.5 to 4.0 parts by weight compared to 100 parts by weight of cooked noodles in terms of improving taste and flavor of the noodles, or still more preferably 1.5 to 3.0 parts by weight compared to 100 parts by weight of cooked noodles.

A thickening agent that is used in the present invention can be any thickening agent that is commonly used for a food product. The example includes water-soluble or sparingly water-soluble thickening polysaccharides such as xanthan gum, tamarind gum, guar gum, curdlan, carrageenan, agar, locust bean gum, hyaluronic acid, pectin, alginic acid, cellulose or methylcellulose, and; proteins such as collagen, albumin, gelatin or casein. In terms of stability of product quality, thickening polysaccharides are preferred. Further, in terms of improving dispersibility, water-soluble thickening polysaccharides are preferred. Furthermore, xanthan gum and tamarind gum are preferred. In addition, these thickening agents can be used singly or in combination of two or more.
The attachment amount of a thickening agent to cooked noodles is preferably 0.005 to 0.20 parts by weight, or more preferably 0.005 to 0.15 parts by weight compared to 100 parts by weight of cooked noodles in terms of improving dispersibility.

An optional component that can be attached to the cooked noodles includes an emulsifying agent and a seasoning.
In terms of improving a homogeneous state of a dispersion liquid, an emulsifying agent is preferably added. Example of an emulsifying agent includes sucrose fatty acid ester, glycerin fatty acid ester, propylene glycol fatty acid ester, sorbitan fatty acid ester, and lecithin. In addition, these emulsifying agents can be used singly or in combination of two or more.

According to the present invention, when water, common salt, fats and oils and a thickening agent are attached simultaneously to cooked noodles, it is desirable that a coating liquid for preventing freezer burn, in which the four components are mixed, is prepared in advance. In this case, the mixing ratio of each component is preferably 2.0 to 15.0 : 0.1 to 2.0 : 0.5 to 5.0 : 0.005 to 0.20 for water : common salt : fats and oils : a thickening agent, respectively. Further, in terms of taste and texture, it is more preferably 5.0 to 10.0 : 0.2 to 1.5 : 1.5 to 4.0 : 0.005 to 0.15 for water : common salt : fats and oils : a thickening agent, respectively.

For preparing the coating liquid, in addition to the four components, an optional component as described above can be appropriately added and mixed.
As an example of the preparation, at first, fats and oils and a thickening agent are admixed with each other. Subsequently, water and common salt are preferably mixed with the mixture. By doing so, each component can be easily dispersed in a coating liquid, so that a homogeneous coating liquid can be obtained.
It is evident that the preparation of a coating liquid is not limited to the mixing order and it can be prepared by mixing them in any other order.
Thus prepared coating liquid can be in any state including an aqueous solution, a suspension, a dispersion liquid, and an emulsion.

Hereinafter, the frozen noodles of the present invention and the method of producing the same are described.
First, noodles are prepared, and by cooking them with heat, gelatinized and cooked noodles are obtained.
Types of the noodles are not particularly limited and example thereof includes macaroni, spaghetti noodles, Japanese thick noodles (Udon), medium-thick noodles (Hiyamugi), thin noodles (Somen), flat-faced noodles (flat noodles; Himokawa-Udon), Japanese buckwheat noodles, Chinese noodles, rice noodles (bihun) and dough wrappers (Chinese dumpling wrappers, laviolis a la vapeur, spring roll, Chinese wonton wrappers, and pizza dough) and the like.
In addition, a method of preparing noodles themselves is not particularly limited either.
Moreover, as a means for cooking, any means which can gelatinize noodles by heat treatment for food cooking can be employed, and example thereof includesboiling, steaming, frying, baking, and microwave heating in a microwave oven and the like.

Subsequently, the coating liquid including water, common salt, fats and oils and a thickening agent as an essential component is attached to cooked noodles which were obtained.
As a means for the attachment, it is not specifically limited and any means which is appropriate for homogeneous coating of the coating liquid on surface of a strand or a lump of noodles can be used. For example, submerging, smearing, spraying and blending and the like using the coating liquid can be mentioned. In terms of an operational efficiency, spraying is preferred.
In addition, since the ultimate requirement is to have all of the essential components attached to cooked noodles as a final product, each of the essential components can be separately attached to the noodles. However, in terms of more homogeneous attachment of the essential components to surface of the cooked noodles, it is preferable that the coating liquid is prepared first and then applied to the cooked noodles so that all of the essential components are simultaneously attached to the noodles.
Specifically, in terms of more homogeneous attachment of the prepared coating liquid to the surface of the cooked noodles, preferably 2.50 to 23.0 parts by weight, or more preferably 6.50 to 14.0 parts by weight of the coating liquid are applied to 100 parts by weight of the cooked noodles.
In this case, product temperature of the cooked noodles is preferably 15°C or lower.

Consequently, by freezing the cooked noodles that are attached with the coating liquid which were obtained, the frozen noodles of the present invention are obtained.
As a means for such freezing, a rapid freezing is preferable for maintaining the quality of noodles.

The frozen noodles of the present invention may have sauces attached thereto, in order for the frozen noodle strands to get easily disentangled or admixed with sauces when they are thawed before eating.
To obtain the frozen noodles, for example, noodles are cooked by heating for gelatinization and a coating liquid is attached to the resulting cooked noodles, and then sauces are attached thereto. More specifically, for example, there is a method which includes steps of attaching a coating liquid to cooked noodles followed by freezing and then attaching sauces to the noodles again followed by freezing to obtain the frozen noodles, and a method which includes steps of attaching first a coating liquid to cooked noodles and then further attaching sauces to the noodles followed by freezing to obtain frozen noodles or the like.
As a means for the attachment of sauces, for example, submerging, coating, filling, smearing, spraying, blending with stirring, sauteing and the like of sauces to strands or lumps of noodles can be mentioned.
Sauces are not limited to those in a narrow sense such as Worcester sauce, pasta sauce and the like. Rather, it can be any one that is usually used depending on the type of cooked noodles. For example, for macaroni, spaghetti noodles or the like, a meat sauce, white sauce, carbonara, marinated pollack roe sauce, Neapolitan sauce and the like can be adopted. For Japanese thick noodles, medium noodles, thin noodles and the like, noodle soup, curry sauce and the like can be adopted. Further, for Chinese noodles, rice noodles (bihun) and the like, Ramen soup, Worcester sauce and the like can be mentioned. Meanwhile, in the sauces, cooked solid stuffs such as vegetables, mushrooms, meats, fishes and shellfishes, eggs, or spices may be appropriately included.

For further prevention of freezer burn or for further achievement of convenient thawing using a microwave oven, and the like, cooked noodles to which a coating liquid has been attached can be filled in a packaging container and then frozen. Alternatively, it can be frozen first and then filled in a packaging container.
Shape of the packaging container can be in a shape of a bag, a cup, a tray or the like. Further, a suitable combination thereof canbe employed. Still further, apush-on lid, a cover-up lid, a pillared lid container and the like can be also used accordingly.
As a material for such packaging container, any material used generally for a packaging container for a food product can be used. Example thereof includes polyethyleneterephthalate, crystalline polyethyleneterephthalate, polypropylene, polyethylene, polystyrene and a composite material thereof. Among them, those that are safe under the heat treatment in a microwave oven are preferred.
Meanwhile, in terms of degassing and prevention of any rupture, an air vent is preferably formed in a packaging container. Further, such air vent is preferably formed on top surface of a packaging container to obtain better degassing. Shape of the air vent can be a circular, an oval, a triangular, a rectangular or a polygonal shape, as well as a slit shape and the like.

For a means for thawing the frozen noodles of the present invention, natural thawing or gradual thawing can be employed at the time of eating. However, rapid thawing based on a microwave treatment, a boiling treatment, a hot steam treatment, an oven treatment and the like is preferable. In addition, when the frozen noodles are packaged in a packaging container, it is preferable that frozen noodles in each packaging containers are separately subj ected to thawing with a microwave treatment, in terms of hygiene.

### Examples

### Example 1

Commercially available dry spaghetti noodles (1.7 mm of diameter, Select 1.7, manufactured by Ma. Ma-Macaroni Co., Ltd.) were boiled for seven minutes till the amount becomes within 220 to 235%, and chilled in cold water. To the surface of thus-obtained cooked spaghetti noodles (200 g), the coating liquid (22.2 g) which has composition as shown in the column of Example 1 in Table 1 below was sprayed for the attachment by using a spray nozzle (manufactured by Spraying Systems). There was almost no dripping of the coating liquid.
The mixing ratio of water, common salt, fats and oils and a thickening agent in the employed coating liquid for this example is shown in the column of Example 1 in Table 1. The coating liquid was prepared by mixing fats and oils with a thickening agent, and then adding water and common salt to the mixture followed by mixing.
After the spraying, the noodles were filled in a container tray (length 20 cm x width 15 cm x height 3 cm). After filling, it was subjected to rapid cooling at -20°C to obtain frozennoodles. The frozen noodles were taken out of the container tray and packaged in a packaging bag, and the packaging bag was sealed.

### Example 2

Frozen noodles were obtained basically in the same manner as Example 1, except for replacing the coating liquid with a coating liquid having composition as shown in column of Example 2 in Table 1.

### Comparative example 1 to 4

Frozen noodles were obtained basically in the same manner as Example 1, except for replacing the coating liquid with coating liquids having composition as shown in each column of Comparative examples 1 to 4 in Table 1.

### Test example 1

Each of the frozen noodles that had been obtained from Examples 1 and 2 and Comparative examples 1 to 4 was maintained at -20°C for ten hours, subjected to a heat shock treatment by which the noodles were kept at -2°C for two hours, then maintained again at -20°C for ten hours, and again subjected to a heat shock treatment by which the noodles were kept at -2°C for two hours. The same operations were then repeated a total of eight times. Consequently, ten frozen spaghetti noodles that had received the heat shock treatment were evaluated regarding freezer burn based on evaluation criteria as described below. The average value obtained from the results is described in Table 1.

### (Evaluation criteria regarding freezer burn)

5 Noodle thickness did not change compared to that before the freezing.
4 Noodle thickness became slightly thinner compared to that before the freezing.
3 Noodle surface became slightly dried and noodle thickness became slightly thinner compared to that before the freezing.
2 Noodle surface became somewhat dried and noodle thickness became somewhat thinner compared to that before the freezing.
1 Noodle surface became dried and noodle thickness became notably thinner compared to that before the freezing.

From Table 1, it is clear that with the attachment of a mixture including water, common salt, fats and oils (soybean oil) and a thickening agent (xanthan gum and tamarind gum) to cooked spaghetti noodles, freezer burn of cooked and frozen spaghetti noodles can be prevented.

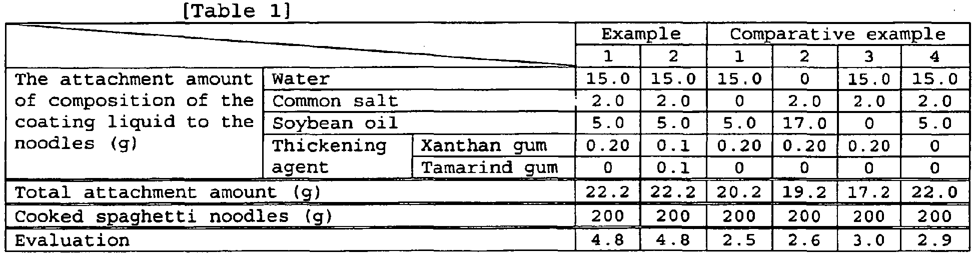

### Test example 2

Frozen noodles were obtained basically in the same manner as Example 1, except that the mixing ratio of common salt included in the coating liquid of Example 1 was changed to the respective mixing ratio described in Table 2 (i.e., Sample Nos. 1 to 5). The attachment amount of the respective coating liquid to the cooked spaghetti noodles (200 g) is indicated in Table 2. Each of thus-obtained frozen noodles was evaluated with respect to freezer burn in the same manner as Test example 1. The average value obtained from the results is described in Table 2.
From Table 2, it is clear that the attachment amount of common salt to the cooked spaghetti noodles (200 g) is preferably 0.4 to 3.0 g. Further, among them, with the attachment amount of common salt in 0.4 to 2.0 g, the cooked spaghetti noodles provide a favorable salty taste when it was served after thawing.

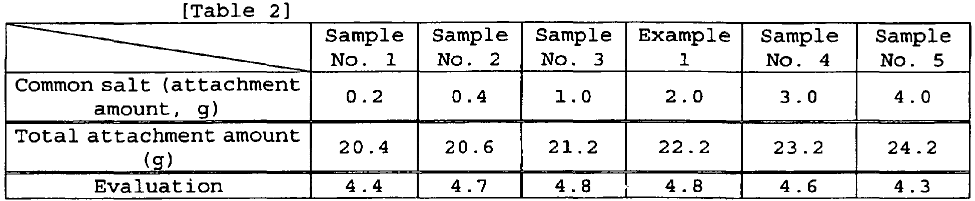

### Test example 3

Frozen noodles were obtained basically in the same manner as Example 1, except that the mixing ratio of fats and oils (soybean oil) included in the coating liquid of Example 1 was changed to the respective mixing ratio described in Table 3 (i.e.. Sample Nos. 6 to 10). The attachment amount of the respective coating liquid to the cooked spaghetti noodles (200 g) is indicated in Table 3. Each of thus-obtained frozen noodles was evaluated with respect to freezer burn in the same manner as Test example 1. The average value obtained from the results is described in Table 3.
From Table 3, it is clear that the attachment amount of soybean oil to the cooked spaghetti noodles (200 g) is preferably 3.0 to 8.0 g.

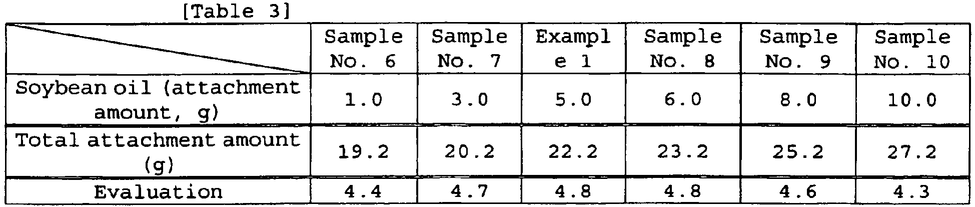

### Test example 4

Frozen noodles were obtained basically in the same manner as Example 1, except that the mixing ratio of xanthan gum included in the coating liquid of Example 1 was changed to the respective mixing ratio described in Table 4 (i.e., Sample Nos. 11 to 15). The attachment amount of the respective coating liquid to the cooked spaghetti noodles (200 g) is indicated in Table 4. Each of thus-obtained frozen noodles was evaluated with respect to freezer burn in the same manner as Test example 1. The average value obtained from the results is described in Table 4.
From Table 4, it is clear that the attachment amount of a thickening agent to the cooked spaghetti noodles (200 g) is preferably 0.03 to 0.30 g.

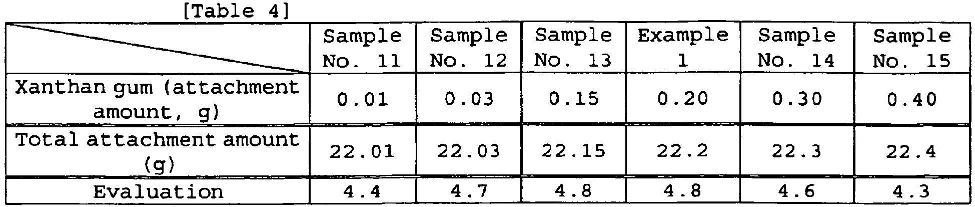

## Claims

1. A method of producing freezer burn resistant frozen noodles, wherein
(i) a coating liquid comprising
(a) water,
(b) common salt,
(c) fats and oils and
(d) a thickening agent
is attached by submerging, smearing, spraying or blending on the surface of a strand or a lump of cooked noodles
(ii) followed by freezing the resulting noodles,
wherein a mixing ratio of each component in the coating liquid is 2.0 to 15.0 : 0.1 to 2.0 : 0.5 to 5.0 : 0.005 to 0.20 for water: common salt : fats and oils : a thickening agent, respectively,

2. Use of a coating liquid comprising water, common salt, fats and oils and a thickening agent having a mixing ratio of each component of 2.0 to 15.0 : 0.1 to 2.0 : 0.5 to 5.0 : 0.005 to 0.20 for water: common salt : fats and oils : a thickening agent, respectively in the coating liquid, for the prevention of freezer burn of frozen noodles by attaching by submerging, smearing, spraying or blending the coating liquid on surface of a strand or a lump of cooked noodles prior to freezing the noodles attached to the coating liquid.

## Patentansprüche

1. Verfahren zur Herstellung Frostbrand-beständiger gefrorener Nudeln, wobei
(i) eine Beschichtungsflüssigkeit, umfassend
(a) Wasser,
(b) herkömmliches Salz,
(c) Fette und Öle und
(d) ein Verdickungsmittel,
durch Eintauchen, Aufschmieren, Besprühen oder Vermischen auf die Oberfläche eines Strangs oder eines Klumpens gekochter Nudeln aufgebracht wird,
(ii) gefolgt von einem Einfrieren der erhaltenen Nudeln,
wobei das Mischungsverhältnis jeder Komponente in der Beschichtungsflüssigkeit jeweils bei 2,0 bis 15,0 : 0,1 bis 2,0 : 0,5 bis 5,0 : 0,005 bis 0,20 für Wasser: herkömmlichem Salz : Fetten und Ölen : einem Verdickungsmittel, liegt.

2. Verwendung einer Beschichtungsflüssigkeit, umfassend Wasser, herkömmliches Salz, Fette und Öle und ein Verdickungsmittel in einem Mischungsverhältnis jeder Komponente von jeweils in der Beschichtungsflüssigkeit 2,0 bis 15,0 : 0,1 bis 2,0 : 0,5 bis 5,0 : 0,005 bis 0,20 für Wasser: herkömmliches Salz : Fette und Öle : einem Verdickungsmittel, zur Vermeidung eines Frostbrands bei gefrorenen Nudeln durch Anhaften unter Eintauchen, Verschmieren, Besprühen oder Vermischen der Beschichtungsflüssigkeit auf die Oberfläche eines Strangs oder eines Klumpens gekochter Nudeln bevor die Nudeln, die an der Beschichtungsflüssigkeit anhaften eingefroren werden.

## Revendications

1. Procédé pour produire des nouilles congelées résistantes à la brûlure de congélation, étant précisé
(i) qu'un liquide de revêtement comprenant
(a) de l'eau
(b) du sel commun,
(c) des matières grasses et des huiles et
(d) un agent épaississant
est fixé par submersion, enduction, pulvérisation ou mélange sur la surface d'un paquet ou d'une masse de nouilles cuites,
(ii) après quoi les nouilles obtenues sont congelées,
étant précisé qu'un rapport de mélange de chaque composant dans le liquide de revêtement est de 2,0 à 15,0 . 0,1 à 2,0 : 0,5 à 5,0 : 0,005 à 0,20 pour l'eau : le sel commun : les matières grasses et les huiles : un agent épaississant, respectivement.

2. Utilisation d'un liquide de revêtement comprenant de l'eau, du sel commun, des matières grasses et des huiles et un agent épaississant présentant un rapport de mélange de chaque composant de 2,0 à 15,0 : 0,1 à 2,0 : 0,5 à 5,0 : 0,005 à 0,20 pour l'eau : le sel commun : les matières grasses et les huiles : un agent épaississant, respectivement, dans le liquide de revêtement, pour empêcher la brûlure de congélation de nouilles congelées, en fixant par submersion, enduction, pulvérisation ou mélange le liquide de revêtement sur la surface d'un paquet ou d'une masse de nouilles cuites, avant de congeler les nouilles fixées au liquide de revêtement.
